# FASCICULE DE BREVET EUROPEEN

(11) **EP 1 459 424 B1**
(45) Date de publication et mention de la délivrance du brevet: **25.05.2011**
(21) Numéro de dépôt: 02804608.4
(22) Date de dépôt: 11.12.2002
(51) Int. Cl.: H02K 7/18, F02N 11/04, H02K 7/14

(54) **MONTAGE DE MACHINE ELECTRIQUE TOURNANTE POUR VEHICULE AUTOMOBILE**
MONTAGE EINER DREHENDEN ELEKTRISCHEN MACHINE FÜR KRAFTFAHRZEUGE
MOUNTING OF A ROTATING ELECTRICAL MACHINE FOR A MOTOR VEHICLE

(30) Priorité: 11.12.2001 FR 0115949
(43) Date de publication de la demande: 22.09.2004
(73) Titulaire: VALEO EQUIPEMENTS ELECTRIQUES MOTEUR, 94017 Créteil Cedex (FR)
(72) Inventeur: TAUVRON, Fabrice, F-91200 Athis-Mons (FR)
(86) Numéro de dépôt international: PCT/FR2002/004294
(87) Numéro de publication internationale: WO 2003/050930

(56) Documents cités:
- EP-A- 0 677 414
- DE-A- 10 043 735
- DE-A- 10 047 950
- FR-A- 2 782 355
- PATENT ABSTRACTS OF JAPAN vol. 014, no. 155 (M-0954), 26 mars 1990 (1990-03-26) & JP 02 016363 A (MAZDA MOTOR CORP), 19 janvier 1990 (1990-01-19)

## Description

### Domaine technique de l'invention

La présente invention se rapporte à un montage de machine électrique tournante montée dans la ligne de transmission de mouvement entre le moteur à combustion interne d'un véhicule automobile et une boîte de transmission de mouvement que comporte ce véhicule automobile.

### Etat de la technique

Cette machine comporte, de manière connue, un stator fixe entourant un rotor avec présence d'un entrefer entre la périphérie interne du stator et la périphérie externe du rotor comme décrit dans le document FR-A- 2 782 355.

Dans ce document le rotor de la machine est porté par un volant d'entraînement solidaire en rotation du vilebrequin du moteur à combustion interne. Ce volant est solidaire du plateau de réaction d'un embrayage à friction comportant un disque de friction, appelé friction d'embrayage, doté d'un moyeu cannelé intérieurement pour liaison en rotation avec l'arbre d'entrée d'une boîte de vitesses à commande manuelle ou robotisée. L'embrayage à friction est un organe de coupure et de démarrage du moteur du véhicule automobile.

En position embrayage engagé le mouvement est transmis du vilebrequin à l'arbre d'entrée de la boîte de vitesses, tandis qu'en position embrayage désengagé on réalise une coupure dans la transmission de mouvement entre le vilebrequin et ledit arbre d'entrée pour changer de rapport de vitesses. Lorsque la boîte de vitesses est en position point mort on peut démarrer le moteur du véhicule aucun mouvement n'étant transmis aux roues du véhicule. Il en est de même avec une boîte automatique de transmission de mouvement.

Dans ce cas l'arbre d'entrée est relié à un appareil d'accouplement hydrocinétique.

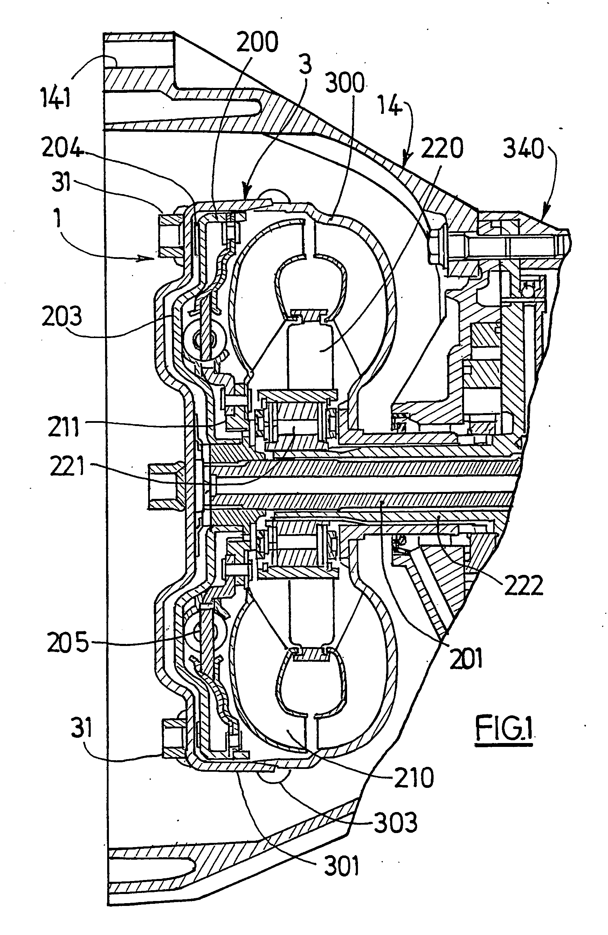

Plus précisément, comme visible à la figure 1, un appareil d'accouplement hydrocinétique 1 comporte un carter 3 annulaire étanche comportant deux parties 300 et 301 reliées entre elles par un cordon de soudage 303. L'une 300 de ces parties porte des aubes pour formation d'une roue d'impulseur tandis que l'autre partie 301 porte des douilles 31 axialement saillante et intérieurement filetées pour liaison avec une pièce de liaison en rotation avec le vilebrequin du véhicule.

A l'intérieur du carter étanche 3 rempli d'huile se trouve une roue de turbine à aubes 210 fixée, ici par rivetage, sur un moyeu 211 cannelé intérieurement pour sa liaison en rotation avec l'arbre d'entrée 201 de la boite automatique de transmission de mouvement, dont on voit en 340 le carter. Une cloche 14 se fixe de manière étanche sur ce carter 340. Les aubes de la roue de turbine 210 font face aux aubes de la roue d'impulseur 300 en sorte que lorsque le carter 3 est entraîné en rotation par le vilebrequin la roue d'impulseur 300 entraîne en rotation la roue de turbine 210 et l'arbre 201 par circulation de l'huile entre les aubes. Cette circulation d'huile provoque un léger gonflement du carter 3. Les roues 210, 300 appartiennent, de manière connue, à un convertisseur de couple en sorte que l'appareil 1 comporte également une roue de réaction 220 reliée à un manchon de réaction 222 par l'intermédiaire d'une roue libre 221. Il est en outre prévu ici un embrayage de verrouillage 200 appelé Lock up. Cet embrayage comporte un piston 203 portant une garniture de frottement 204 et relié, par l'intermédiaire d'un amortisseur de torsion 205 ou rigidement, au moyeu 211.

Ainsi qu'on le sait, notamment après démarrage du véhicule, à une vitesse déterminée ou prédéterminée on verrouille l'embrayage 200, la garniture 204 étant alors serrée entre le piston 203 et la paroi transversale en regard de la partie 301 pour éliminer le phénomène de glissement entre les roues 300, 210 et réduire ainsi la consommation du véhicule.

La cloche 14 est destinée à se fixer sur le carter du moteur à combustion interne du véhicule et présente à cet effet un rebord avec des passages 141 pour le montage d'organes de fixation à ce carter avec le plus souvent interposition d'une entretoise.

On connaît également du document DE 100 43 735 A1 un système de propulsion pour véhicule automobile avec boîte de vitesse manuelle, ledit système comportant :
- un premier volant monté sur un vilebrequin d'un moteur à combustion. Un moteur-générateur électrique est monté sur le premier volant.
- Un deuxième volant monté sur ledit moteur-générateur électrique et une boite de vitesse reliée audit volant via un embrayage.

Le premier volant a un moment d'inertie supérieur au deuxième volant.

On connaît enfin du document EP0 677 414 A1 une transmission hybride électromécanique comprenant :
- des moyens d'entrée pour fournir de la puissance,
- un moteur-générateur électrique
- des moyens d'engrenage disposés entre les moyens d'entrée et le moteur-générateur, et
- des moyens de frein pour permettre audit moteur-générateur d'entraîner lesdites moyens d'entrée pendant une séquence de démarrage.

on connaît également du document DE 10 047 950 A un montage selon le préambule de la revendication 1.

### Objet de l'invention

Selon le document FR-A- 2 782 355, décrit précédemment, il se pose alors un problème pour monter le rotor de la machine électrique tournante dans la ligne de transmission de mouvement entre le vilebrequin du moteur à combustion interne du véhicule automobile et le carter de l'appareil d'accouplement hydrocinétique.

La présente invention a pour objet de résoudre de manière simple et économique ce problème.

Suivant l'invention un montage de machine électrique tournante pour véhicule automobile est définie dans la revendication 1.

Grâce aux entraîneurs et au support du rotor on obtient un montage simple permettant l'obtention d'un entrefer précis entre le stator et le rotor. En outre on ne modifie pas le carter de l'appareil d'accouplement hydrocinétique et le vilebrequin. La cloche est également inchangée et le rotor peut avoir la hauteur radiale requise pour une bonne performance de la machine électrique tournante.

Grâce aux entraîneurs répartis de part et d'autre du rotor an obtient un montage simple permettant l'obtention d'un entrefer précis, entre le stator et le rotor, car dans ce mode de réalisation le rotor n'est pas porté en porte-à-faux.

Avantageusement l'un au moins des entraîneur est axialement souple pour notamment filtrer les vibrations axiales et absorber les déformations, notamment de gonflement, en fonctionnement du carter de l'appareil d'accouplement hydrocinétique.

Selon d'autres caractéristiques de l'invention :
pour réduction de sa masse, le support rigide comporte une première partie sous forme d'un manchon d'orientation axiale, dont la périphérie externe constitue une portée de montage pour le rotor; ledit manchon s'étendant axialement entre les deux entraîneurs;
pour réduction de l'encombrement axial du montage, le manchon présente un flasque dirigé radialement vers la périphérie externe du premier entraîneur pour liaison du support au premier entraîneur ;
le flasque est de forme tronconique pour réduire encore l'encombrement axial ;
le flasque présente à sa périphérie externe un anneau transversal en regard de la périphérie externe du premier entraîneur pour sa fixation sur ce premier entraîneur à l'aide d'organes de fixation et l'obtention d'un bon parallélisme ;
pour mieux absorber les vibrations axiales et les déformations du carter de l'appareil d'accouplement hydrocinétique, le premier entraîneur est axialement souple et consiste de manière économique en une plaque à partie centrale d'orientation transversale par rapport à l'axe de symétrie axial que comporte ledit montage ;
pour mieux soutenir le support rigide et le rotor, le premier entraîneur est rigide et comporte une partie centrale d'orientation transversale par rapport à l'axe de symétrie axial que comporte le dit montage ;
pour améliorer encore la précision de l'entrefer entre le stator et le rotor, le premier entraîneur rigide présente un premier manchon d'orientation axiale servant de centreur au manchon du support en sorte que la périphérie externe du premier manchon est en contact intime avec la périphérie interne du manchon du support ;
pour réduire encore l'encombrement axial du montage la périphérie externe du premier entraîneur est décalée axialement par rapport à sa partie centrale en direction du carter du moteur à combustion interne du véhicule automobile ;
pour occuper au mieux la place disponible au centre du montage et obtenir un bon centrage du support par rapport au carter de l'appareil d'accouplement hydrocinétique afin d'améliorer encore la précision de l'entrefer entre le stator et le rotor, le support comporte un anneau saillant en direction du nez de centrage et cet anneau est solidaire d'un centreur monté à centrage sur le nez de centrage ;
pour occuper au mieux le volume disponible, l'anneau et le flasque s'étendent en saillie de part et d'autre du rotor respectivement vers le nez de centrage et vers la périphérie externe du premier entraîneur ;
le centreur comporte une extrémité libre pénétrant à centrage dans une cavité de l'extrémité libre du vilebrequin pour tirer partie de cette cavité du type standard ;
le centreur présente une collerette saillante de fixation pour l'anneau et la partie centrale du second entraîneur est de manière simple intercalée entre l'anneau et la collerette ;
pour absorber les déformations du carter de l'appareil d'accouplement hydrocinétique, le second entraîneur est axialement souple et est fixé à sa périphérie externe sur des douilles de fixation solidaires du carter de l'appareil d'accouplement hydrocinétique pour utilisation d'un appareil du type standard et amortir les vibrations axiales ;
pour réduire le nombre de pièces et les temps d'assemblage en final, le second entraîneur consiste en une collerette saillante issue du centreur et fixée sur le carter de l'appareil d'accouplement hydrocinétique, cette collerette constituant l'anneau issu du support en sorte que le centreur forme une pièce unique avec le support et le second entraîneur ;
pour faciliter l'assemblage du montage, des douilles de centrage interviennent entre l'entretoise et respectivement le carter du moteur à combustion interne du véhicule automobile et la cloche ;
la périphérie externe du premier entraîneur est fixée sur le flasque du support à l'aide d'organes de fixation, tels que des vis,
un carter d'huile est fixé dans la partie basse du carter du moteur à combustion interne du véhicule automobile, ce carter d'huile présentant une ouverture pour accès aux organes de fixation par rotations successives du premier entraîneur ;
la périphérie externe du flasque s'étend en dessous de la périphérie interne du stator pour réduire l'encombrement axial du montage et/ou augmenter la taille des chignons des bobinages d'induit du stator.

### Description sommaire des dessins

La description en annexe illustre l'invention en regard des dessins annexés dans lesquels :
- la figure 1 est une vue en coupe axiale partielle d'un appareil d'accouplement hydrocinétique conventionnel;
- la figure 2 est une vue en coupe axiale d'un montage de machine électrique tournante selon l'invention avant assemblage de la cloche de l'appareil d'accouplement hydrocinétique au carter du moteur à combustion interne du véhicule automobile ;
- la figure 3 est une vue analogue à la figure 2 après assemblage de la cloche de l'appareil d'accouplement hydrocinétique avec le carter du moteur à combustion interne du véhicule automobile ;
- Les figures 4,5-6,7-8,9-10,11 sont des vues analogues aux figures 2 et 3 pour respectivement un deuxième, un troisième, un quatrième et un cinquième exemple de réalisation selon l'invention.

### Description de modes de réalisation préférentiels de l'invention

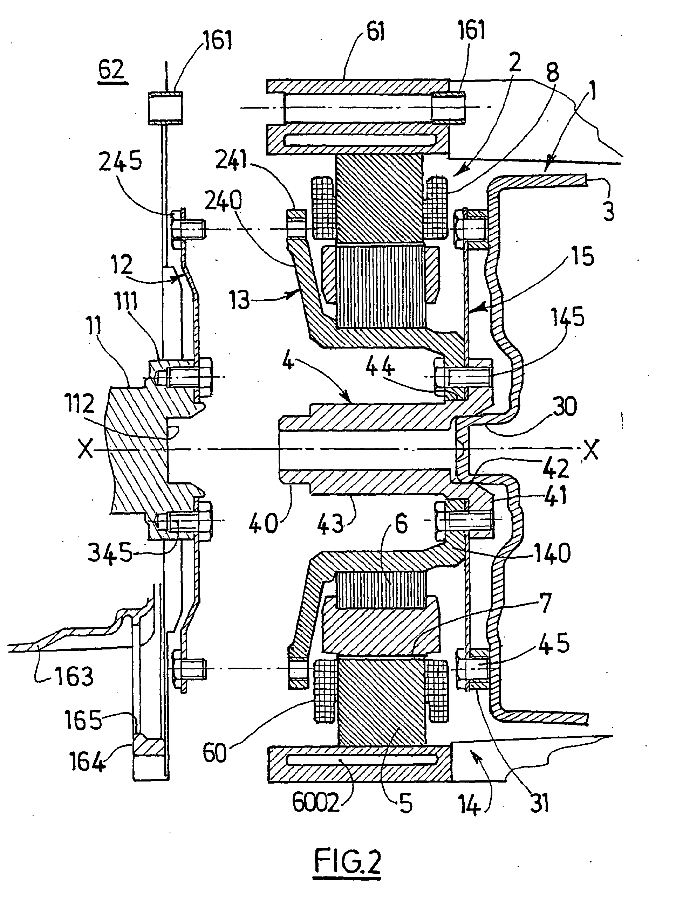

Dans les figures illustrées les éléments analogues seront affectés des mêmes signes de référence. Par simplicité on a représenté dans les figures 2 à 11 qu'une partie du carter 3 de l'appareil d'accouplement hydrocinétique (celle portant les douilles de fixation 31 et le nez de centrage 30) et qu'une partie de la cloche 14.

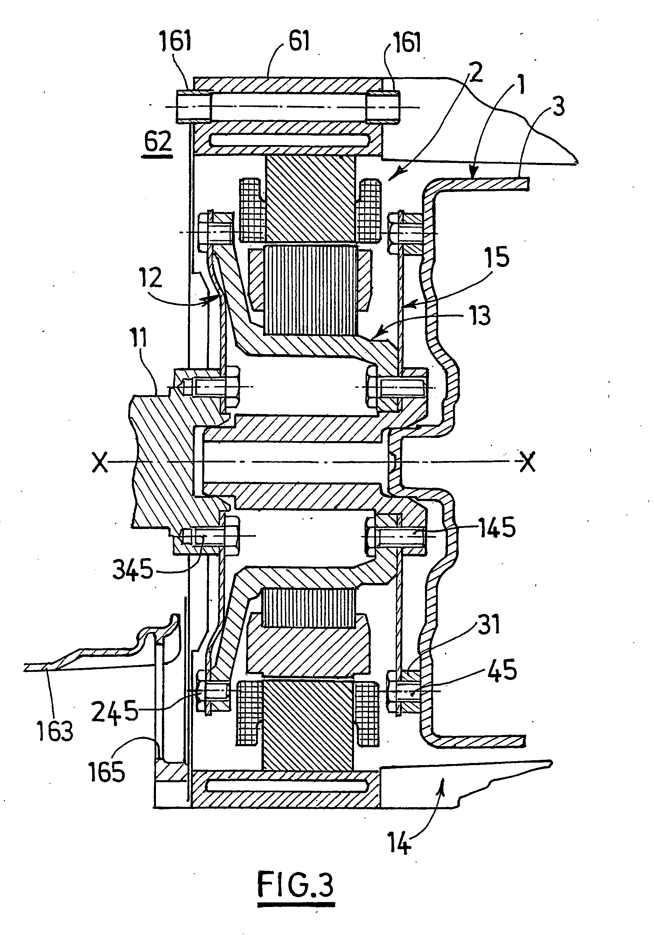

Dans le premier mode de réalisation selon l'invention des figures 2 et 3 on voit en 2 une machine électrique tournante intercalée axialement entre le moteur à combustion interne d'un véhicule automobile et un appareil d'accouplement hydrocinétique en prise avec l'arbre d'entrée, décrit à la figure 1, d'une boîte automatique de transmission de mouvement, que comporte ce véhicule automobile.

La machine électrique tournante 2 est ici du type asynchrone et comporte un stator 5 entourant un rotor 6. Le stator et le rotor coaxiaux sont de forme annulaire et présentent de manière connue un corps ou noyau sous la forme d'un paquet de tôles. Le corps du rotor 6 est conformé pour le montage d'une cage d'écureuil 60, tandis que le corps du stator comporte des rainures, par exemple semi-fermées, pour le montage de conducteurs électriques agencés pour former les bobinages d'induit 8 de la machine. Ces conducteurs appartiennent à des bobinages classiques à fils ou consistent en des barres par exemple en des épingles en forme de U comme visible dans le document US-A-2 928 963 ; la machine étant du type polyphasé. De manière connue, les bobinages d'induit 8 traversent le corps du stator 5 et présentent en saillie à l'extérieur du corps du stator des têtes appelées chignons. De même la cage d'écureuil s'étend en saillie de part et d'autre du corps du rotor 6.

Le stator 5 est porté intérieurement par une entretoise 61 annulaire dotée intérieurement d'une chambre de refroidissement 6002 pour la circulation d'un fluide caloporteur, tel que le liquide de refroidissement du moteur du véhicule, permettant d'évacuer la chaleur et de refroidir le stator. La fixation du stator sur la périphérie interne de l'entretoise 61 est, par exemple, réalisée par frettage.

Cette entretoise 61 est implantée à la périphérie externe de la cloche 14 en étant interposée entre le carter 62 du moteur à combustion interne du véhicule automobile et la cloche 14 de logement de l'appareil d'accouplement hydrocinétique. Cette cloche 14 est solidaire du carter de la boîte automatique de transmission de mouvement. Le moteur du véhicule comporte un arbre menant sous la forme d'un vilebrequin 11, dont l'extrémité libre 111 est conformée pour porter, à l'extérieur du carter 62, un premier entraîneur menant 12 d'un support 13 du rotor 6. L'entraîneur 12 et le support 13 sont de forme annulaire. L'axe axial de symétrie du vilebrequin 11 est aligné avec celui de l'arbre d'entrée du type mené de la boîte automatique de transmission de mouvement visible à la figure 1, en sorte qu'il est constitué un axe de symétrie axiale X-X constituant l'axe de rotation du vilebrequin 11, de l'arbre mené de la boîte automatique de transmission de mouvement et du rotor 6.

La cloche 14 entoure le carter 3, ici métallique, de l'appareil d'accouplement hydrocinétique. Des vis non visibles assurent la fixation de l'entretoise 61. Ces vis présentent une tête prenant appui sur un rebord radial, que présente la cloche 14 à son extrémité libre. Les vis traversent le rebord de la cloche 14 à la faveur des passages 141 de la figure 1 et l'entretoise pour se visser dans des taraudages du carter 62 et serrer l'entretoise entre la cloche 14 et le carter 62. Bien entendu il est prévu des douilles de centrage 161 de l'entretoise 61 portées respectivement par la cloche 14 et par le carter 62 du moteur du véhicule, ici à raison de deux douilles 161 diamétralement opposées portées respectivement par le carter 62 et la cloche 14. En variante l'entretoise 61 est d'un seul tenant avec le carter 62 ou la cloche 14. Bien entendu l'entretoise en variante est dépourvue de chambre de refroidissement. En variante elle est du type de celle décrite à la figure 21 du document FR-A-2 782 355 auquel on se reportera pour plus de précisions.

La chambre de refroidissement 6002 de l'entretoise 61 est en forme de canal à l'intérieur duquel circule un fluide caloporteur. Ce canal se raccorde à une tubulure d'entrée et à une tubulure de sortie reliées ici au fluide de refroidissement du moteur du véhicule comme décrit dans le mode de réalisation des figures 14 et 15 du document FR-A-2 782 355 auquel on se reportera pour plus de précisions.

L'entretoise 61, le stator 5 et le rotor 6 sont de forme annulaire en étant montés de manière coaxiale.

Un entrefer radial annulaire 7 existe entre la périphérie interne du stator 5 et la périphérie externe du rotor 6.

Cette machine 2 est interposée axialement entre le carter 62 du moteur du véhicule et le carter 3 de l'appareil d'accouplement hydrocinétique, c'est à dire entre le bloc moteur du véhicule automobile et le carter 3, ici en tôle emboutie.

Le support 13 est rigide et comporte une première partie annulaire sous la forme d'un manchon 46, d'orientation axiale.

La périphérie externe du manchon 46 constitue une portée de montage d'orientation axiale pour le rotor 6, ici monté par frettage sur la dite portée. A cet effet la périphérie externe du manchon 46 présente un épaulement à son extrémité axiale la plus proche du carter 62 du moteur du véhicule. En variante la fixation du paquet de tôle du rotor 6 sur la portée de montage du manchon 46 est réalisée par un montage à cannelures avec verrouillage axial par sertissage à l'autre extrémité du paquet de tôles. En variante ce montage est réalisé par soudage ou par un montage à l'aide de vis montées entre cuir et chair comme par exemple à la figure 26 du document FR-A- 2 782 355. Il en est de même du montage du stator sur l'entretoise 61.

Ce support 13 présente centralement à sa périphérie interne une deuxième partie d'orientation transversale sous la forme d'un anneau de fixation 140 saillant en direction du nez 30 et doté de trous pour le passage d'organes de fixation 145 du support 13 à un centreur 4 de forme tubulaire. L'anneau 140 est dirigé radialement vers l'axe X-X et s'étend perpendiculairement à celui-ci. L'anneau 140 se raccorde à sa périphérie externe à l'extrémité axiale du manchon 46 la plus proche du carter 3.

Le manchon 46 est à partir de l'anneau 140 dirigé axialement vers le carter 62 et se raccorde à sa deuxième extrémité axiale, la plus proche du carter 62 et de l'entraîneur 12, à une troisième partie du support 13 en forme de flasque tronconique 240 saillant en direction de la périphérie externe du premier entraîneur en étant dirigé radialement vers l'entretoise 61. Le flasque 240 est doté à sa périphérie externe de trous taraudés pour le montage d'organes de fixation 245 du support 13 au premier entraîneur 12 de forme annulaire. Le flasque 240 et l'anneau 140 sont dirigés transversalement en sens inverse en étant implantés axialement de part et d'autre du rotor 6. Dans les figures 2 et 3 les organes de fixations 145, 245 consistent en des vis. En variante le flasque 240 est d'orientation transversale et s'étend donc perpendiculairement à l'axe X-X. En variante l'anneau 140 est de forme tronconique comme le flasque 240.

Dans tous les cas et dans toutes les figures le flasque 240 est adjacent à la cage d'écureuil 60, un faible espace existant entre l'extrémité de la cage 60 la plus proche du carter 62 et le flasque 240 intercalé axialement entre le rotor 6 et l'entraîneur 12.

Le support rigide 13 est d'un seul tenant; ses parties 140, 240, 46 étant obtenues par exemple par moulage en sorte que ce support est relativement léger. En variante le flasque 240 et/ou l'anneau 140 sont rapportés sur le manchon 46. On remarquera que le manchon 46 est plus long axialement que le rotor 6 et qu'il peut s'étendre jusqu'au voisinage de l'entraîneur 12. La périphérie interne du manchon 46 n'est pas usinée.

La forme tronconique du flasque 240, dirigé vers la périphérie externe de l'entraîneur 12, permet de réduire l'encombrement axial comme mieux visible à la figure 3.

Plus précisément l'entraîneur 12 consiste en une plaque de faible épaisseur en forme de disque. La périphérie externe, en forme d'anneau, de l'entraîneur 12 est, pour réduire l'encombrement axial du montage, décalée axialement en direction du carter 62 par rapport à la partie centrale de l'entraîneur 12 fixée à l'aide d'organes de fixation 345, ici des vis, sur l'extrémité libre 111 du vilebrequin 11. L'entraîneur 12 comporte une partie sinueuse de raccordement de sa partie centrale à sa périphérie externe de forme annulaire portant à prémontage les vis 245 comme visible à la figure 2.

La partie centrale- et la périphérie externe du premier entraîneur 12 sont donc d'orientation transversale par rapport à l'axe X-X. En variante le premier entraîneur est plat et d'orientation transversale. Dans tous les cas la partie centrale de l'entraîneur 12 est d'orientation transversale.

L'inclinaison du flasque 240 dépend du décalage axial entre la partie centrale et la partie périphérique de l'entraîneur 12 comme visible à la figure 3. Le flasque 240 présente à sa périphérie externe un anneau 241 transversal doté de trous taraudés pour le montage des vis 245. L'anneau 241 est adjacent à la périphérie interne du chignon des bobinages 8 le plus proche du carter 62 et s'étend radialement au-dessus de l'entrefer 7 de la machine électrique 2. Cet anneau 241 s'étend en regard de la périphérie externe du premier entraîneur pour sa liaison avec celui-ci à l'aide des organes de fixation 245. Après fixation l'anneau 241 est en contact avec la périphérie externe du premier entraîneur 12 axialement souple pour absorber les vibrations axiales du vilebrequin et les déformations du carter 3.

L'extrémité 111 du vilebrequin 11 est en forme d'anneau radialement saillant de diamètre supérieur à la partie courante du vilebrequin et présente des trous taraudés pour le montage des vis 345. Cet anneau 111 est entaillé à son extrémité libre pour formation, d'une part, d'une portée annulaire de centrage d'orientation axiale pour la périphérie interne de l'entraîneur 12 et, d'autre part, d'un épaulement transversal d'appui pour l'entraîneur 12 globalement d'orientation transversale par rapport à l'axe X-X. L'entraîneur 12 est fixé par avance sur le vilebrequin, c'est à dire avant assemblage de la cloche 14 au carter 62. Le vilebrequin 11 est ici du type standard prévu pour recevoir le nez 30 du carter 3.

L'extrémité 111 présente centralement une cavité borgne de centrage 112 pour l'extrémité libre épaulée 40 de plus petit diamètre d'un centreur 4. Cette extrémité 40 est donc formée à la faveur d'un changement de diamètre. On notera que la cavité de centrage 112 est délimitée par un chanfrein d'entrée pour l'extrémité 40 du centreur 4 implanté radialement en dessous du rotor 6 et du manchon 46. Le diamètre externe de l'extrémité 40 est égal au diamètre de l'extrémité libre du nez 30 du carter 3 en sorte que le centreur 4 rallonge le nez 30 pour utiliser un carter standard 3. L'extrémité libre 40 du centreur pénètre à centrage dans la cavité de centrage 112.

L'autre extrémité axiale du centreur 4 présente, d'une part, intérieurement une augmentation de diamètre pour formation d'une portée de centrage cylindrique 42 pour le nez de centrage 30 de l'appareil d'accouplement hydrocinétique et, d'autre part, une collerette 41 radialement saillante dotée de trous taraudés pour la fixation des vis 145 avec interposition de la partie centrale d'orientation transversale d'un second entraîneur 15 entre l'anneau 140 et la collerette 41. L'alésage interne du centreur présente donc une augmentation de diamètre pour formation de la portée 42. On notera que le nez 30 central est venu d'emboutissage du carter 3. En variante le nez 30 est rapporté par exemple par soudage sur le carter 3.

Le centreur 4 présente à sa périphérie externe trois portions de diamètre croissant à savoir une portion de plus petit diamètre constituant l'extrémité libre 40 du centreur, une portion médiane 43 de diamètre supérieur à celui de l'extrémité 40 et enfin une portion 44 de diamètre supérieur à la portion 43. La portion 44 se raccorde à la collerette 41 d'orientation transversale et sert de portée de centrage à la périphérie interne de l'anneau 140.

Le second entraîneur 15 est mince et consiste ici en une plaque, en forme de disque, fixée à sa périphérie externe à l'aide d'organe de fixation 45, ici des vis, sur des douilles taraudées 31 que porte en saillie axiale à sa périphérie externe le carter 3 de manière précitée.

L'entraîneur 15, d'orientation transversale, est de forme plate et présente donc à sa périphérie externe et interne, appartenant à sa partie centrale, des trous pour respectivement le passage des vis 45 et 145. Le second entraîneur 15 est donc axialement souple pour absorber les vibrations axiales et les déformations du carter 3 dues notamment au gonflement de celui-ci en fonctionnement.

On notera que le diamètre de la portée cylindrique de centrage 42, de plus grande taille que l'alésage central du centreur 4, est prolongé par un chanfrein d'entrée pour le nez 30, dont la périphérie externe est en contact intime avec le diamètre de la portée 42 du centreur. De même la périphérie externe de l'extrémité 40 est destinée à venir en contact intime avec la partie d'orientation axiale du contour délimitant la cavité annulaire 112.

Le centreur 4 multifonctions est une pièce économique et de fabrication simple. Le centreur 4 permet d'obtenir un entrefer 7 précis et permet, en combinaison avec l'anneau 140, d'occuper au mieux l'espace disponible au centre du montage et du carter 3. En effet le carter 3 présente une dépression annulaire à la périphérie externe de son nez 30. On tire partie de cette dépression pour implanter la collerette 41, dont la hauteur dépend de la hauteur de cette dépression en étant inférieure à celle-ci.

L'encombrement diamétral de la machine 2 dépend des applications et notamment de la puissance de celle-ci. Il en est de même de la longueur axiale de la machine 2 et donc du centreur 4.

Grâce aux entraîneurs 12, 15 troués centralement, au support 13 et au centreur 4 on obtient un entrefer 7 précis et le plus petit possible, ainsi qu'une bonne tenue mécanique du vilebrequin. Les performances de la machine 2 sont augmentées et les vibrations axiales engendrées par le vilebrequin et les déformations en fonctionnement du carter 3 sont bien filtrées. Les entraîneurs 12, 15 s'étendent en saillie de part et d'autre du rotor 6; le premier entraîneur 12 étant fixé à sa périphérie externe au support 13, tandis que le deuxième entraîneur est fixé centralement au support 13. Il en est de même dans les autres figures.

De manière connue un carter d'huile 163 est situé en partie basse du carter moteur 62. Ce carter d'huile 163 est doté d'un rebord transversal saillant 164 muni d'une ouverture 165 pour accès aux organes de fixation 245.

La machine 2 a plusieurs fonction. Elle constitue un générateur de courant en forme d'alternateur pour les consommateurs du véhicule et également un démarreur pour le véhicule. Elle permet d'arrêter le moteur du véhicule au feu rouge et de le redémarrer ensuite. Elle permet également d'éviter un calage du moteur du véhicule en donnant de l'énergie supplémentaire à cet effet.

Les bobinages d'induit 8 sont pour ce faire reliés à une unité électronique de gestion et de commande recevant des informations relatives notamment à la vitesse de rotation du vilebrequin 11 ou du carter 3 et à celle de l'arbre d'entrée de la boîte automatique.

Toutes les fonctions de la machine sont décrites par exemple dans les documents FR-A-2 782 355 et WO 98/05882 auxquels on pourra se reporter.

Le montage de la machine électrique tournante 2 comporte les étapes suivantes:
a) montage du centreur 4 sur le nez 30 par enfilage axial de la portée 42 sur la périphérie externe du nez 30;
b) fixation du second entraîneur 15 sur les douilles 31 à l'aide des vis 45 prémontées de préférence sur l'entraîneur 15; la périphérie interne de l'entraîneur venant alors en contact avec la collerette 41;
c) montage de l'ensemble entretoise 61-rotor 6 sur la cloche 14 par enfilage axial de l'entretoise 61 sur les douilles de centrage 161, de préférence diamétralement opposées, portées par la cloche 14;
d) montage de l'ensemble rotor 6-support 13 sur la portée 44 et fixation de l'entraîneur 15 et de l'anneau 140 du support 13 à la collerette 41 à l'aide des vis 145,
e) rapprochement axial relatif de la cloche 14 par rapport au carter moteur 62 avec enfilage axial de l'entretoise 61 sur les douilles 161, de préférence diamétralement opposées, portées par le carter 62 et enfilage axial de l'extrémité 40 dans la cavité 112, sachant que le premier entraîneur 12 est fixé par avance sur le vilebrequin,
f) fixation de l'entretoise 61 sur la cloche 14 et le carter 62 à l'aide de vis ou de boulons non représentés et
g) fixation de l'entraîneur 12 sur l'anneau 241 du flasque 240 à l'aide des vis 245, de préférence prémontées sur l'entraîneur 12.

Ainsi qu'il ressort à l'évidence des dessins et de la description on fixe les vis 245 une à une et par rotations successives à l'aide d'un outil passant à travers l'ouverture 165 du carter d'huile 163. On notera, lors des étapes e) et f), que l'on tire partie des jeux axiaux au sein de l'appareil d'accouplement hydrocinétique en sorte que le carter 3 peut se déplacer axialement.

Bien entendu en variante les douilles de centrage 161 sont portées par l'entretoise 61. En variante une série des douilles est portée par l'entretoise et l'autre série par l'un des éléments carter 62-cloche 14. Toutes les combinaisons sont possibles ; les douilles 161 pénétrant dans un passage calibré complémentaire doté de préférence d'un chanfrein d'entrée.

Ainsi en variante dans l'étape c) on engage les douilles 161 dans les passages calibrés de la cloche 14 et dans l'étape e) on engage les douilles dans les passages calibrés du carter 62.

De préférence la collerette 41 présente au moins un pion de centrage pénétrant dans un trou complémentaire de l'entraîneur 15 pour la mise en place de cet entraîneur 15 sur le centreur 4 et faciliter ensuite la fixation des vis 145. Ce pion sert avantageusement également de centreur à l'anneau 140. De même l'extrémité 111 du vilebrequin 11 présente dans un mode de réalisation un pion de centrage pénétrant de manière complémentaire dans un trou de l'entraîneur 12 pour le montage de cet entraîneur 12 sur l'extrémité 111 et faciliter le montage des vis 345. Les pions s'engagent dans des trous associés pour formation de détrompeurs. Toute autre forme de détrompeur, formant moyen d'indexation angulaire entre les pièces concernées, est envisageable. Un tel détrompeur en variante intervient entre le premier entraîneur et l'anneau 241 du flasque 240 en sorte qu'en variante les vis 245 ne sont pas prémontées sur le premier entraîneur.

Les vis 245 et 45 sont plus courtes axialement que les vis 145, 345. Les vis 245, 45 sont implantées ici sur une circonférence moyenne de même diamètre. Il en est de même des vis 145 et 345, le diamètre d'implantation de ces vis étant inférieur au diamètre d'implantation des vis 45, 245.

En variante au lieu des vis 45, 145, 245, 345 on peut utiliser des écrous venant se visser sur des tiges filetées portées en saillie axiale respectivement par la collerette 41, par les douilles 31, par l'anneau 241 et l'extrémité libre 111 du vilebrequin.

Les fixations précitées sont démontables. En variante les vis 45 et/ou 345 sont remplacées par des fixations non démontables par exemple par rivetage ou soudage.

En variante les fixations 245 sont démontables et toutes les autres indémontables.

En variante toutes les fixations sont indémontables.

En variante la fixation de l'entraîneur 12 sur l'extrémité 111 est réalisée à l'aide d'une vis centrale unique.

En variante les anneaux périphériques des entraîneurs 12,15 de même hauteur et/ou du flasque 240 et/ou de l'anneau 140 sont fragmentés circonférentiellement en secteurs annulaires de fixation.

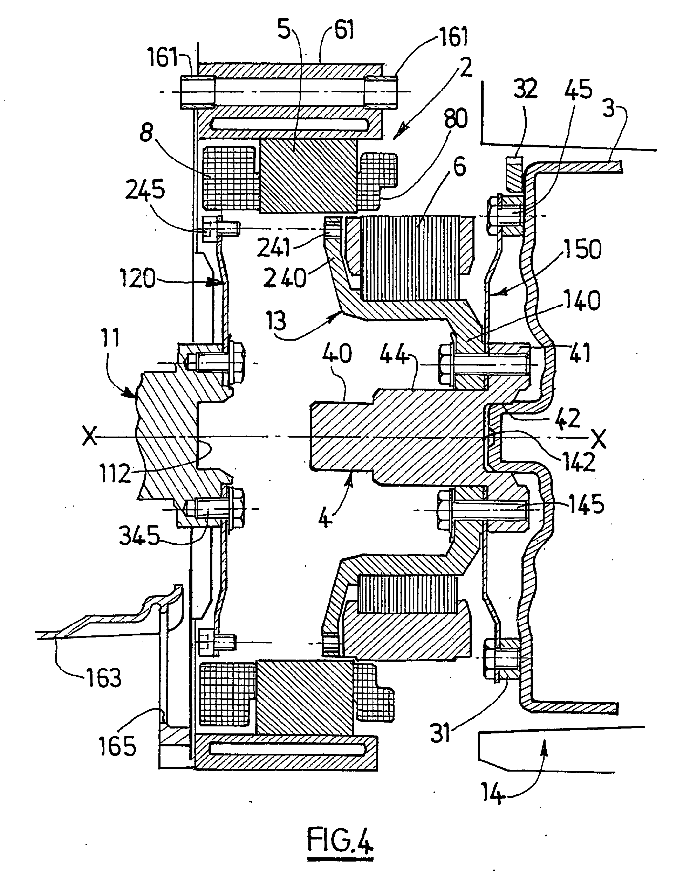

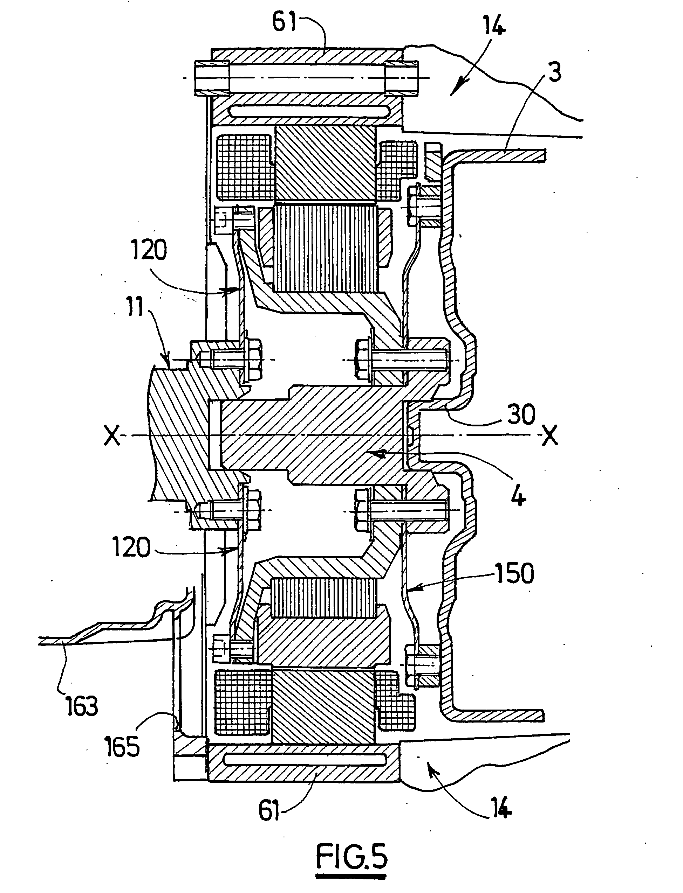

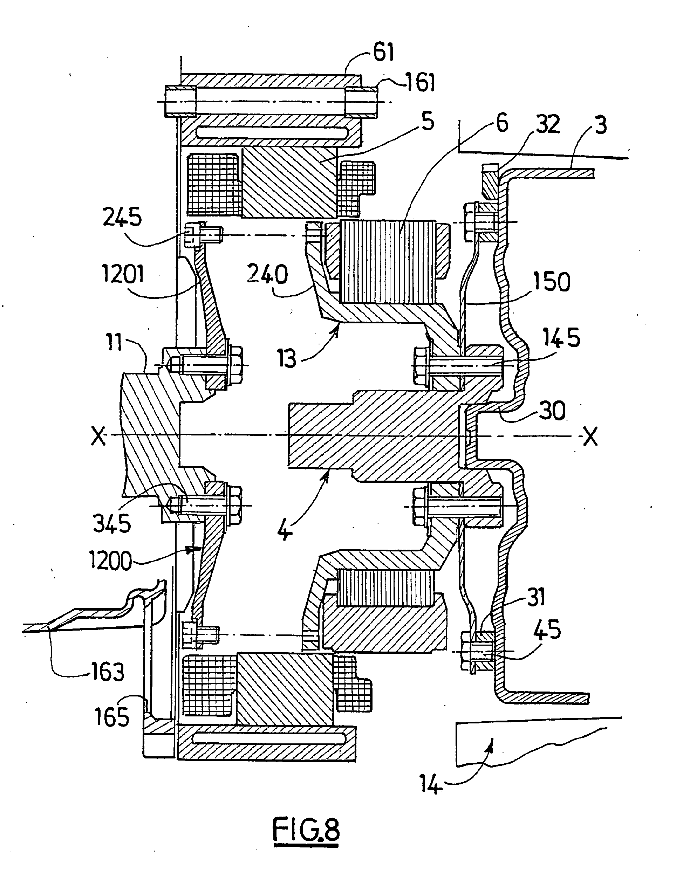

En variante on peut réduire l'encombrement axial du montage entre les carter 62, 3 de la machine 2 et/ou augmenter la taille des bobinages 8 de celle-ci comme visible dans le deuxième mode de réalisation des figures 4 et 5, dans lesquelles le deuxième entraîneur 150 est plus haut que le premier entraîneur 12. Il en est de même dans les figures 8 à 11.

Dans les figures 4 et 5 les portions 40 et 44 du centreur 4 sont pleines. Dans ce mode de réalisation on augmente le diamètre de la portion médiane qui ainsi est confondue avec la portion 44. La portée annulaire de centrage 42 appartient à une cavité borgne 142 et constitue une paroi d'orientation axiale délimitant cette cavité 142. Le premier entraîneur 120 est moins haut que celui des figures 2 et 3, tandis que le second entraîneur 150 présente à sa périphérie externe un anneau de fixation décalé axialement en direction du carter 3 par rapport à sa partie centrale raccordée par une partie sinueuse audit anneau. Dans une variante de réalisation ont tire partie du décalage axial de l'anneau externe pour fixer celui-ci directement par soudage sur le carter métallique 3 en sorte que la présence des douilles 31 n'est pas obligatoire. En variante, de manière précitée, l'anneau externe est fixé par soudage sur les douilles 31 en sorte que celles-ci ne sont pas forcément filetées.

Les deux entraîneurs 120, 150 sont en forme de plaque annulaire comme dans les figures 2 et 3 et ont, pour réduction de l'encombrement axial du montage, une partie sinueuse; les vis 245 étant implantées sur une circonférence de diamètre inférieur à celui du diamètre de la circonférence moyenne d'implantation des vis 45.

L'entraîneur 150 présente une partie centrale et une périphérie externe d'orientation transversale comme les entraîneurs 12 et 120.

On notera que les vis 245 présentent une tête dotée d'une empreinte pour la prise d'un outil alors que les autres vis 45, 145, 345 ont une tête hexagonale comme dans les figures 2 et 3. Bien entendu en variante certaines au moins de ces vis présentent une tête avec une empreinte.

Le flasque 240 est moins haut que celui des figures 2 et 3, le diamètre externe de son anneau 241 étant inférieur à celui de la périphérie interne du stator 5 pour pouvoir passer en dessous du stator 5. De même le diamètre externe de l'entraîneur 120 est inférieur au diamètre interne du stator 5.

Ainsi on monte d'abord le centreur 4 sur le nez 30, puis on fixe l'entraîneur 150 sur les douilles 31 et enfin on monte le support 13, équipé du rotor 6, sur le centreur 4 On monte l'entretoise sur le carter 62 à l'aide des douilles 161 et l'entraîneur 120 sur le vilebrequin ce qui rend plus aisé par la suite l'assemblage car l'entretoise est portée par le carter 62 en sorte que la cloche 14 est moins lourde.

Ensuite, le vilebrequin 11 étant déjà équipé du premier entraîneur 120, on rapproche axialement la cloche 14 par rapport au carter 62 en enfilant axialement, d'une part, les douilles 161 dans des trous correspondants de la cloche 14 et, d'autre part, l'extrémité 40 dans la cavité de centrage 112. Ensuite on fixe l'entretoise 61 sur la cloche et le carter 62. Enfin on fixe l'entraîneur 120 sur l'anneau 241 à l'aide des vis 245 et à la faveur de l'ouverture 165 comme dans les figures 2 et 3.

On simplifie de manière précitée l'assemblage puisque l'entretoise est prépositionnée sur le carter 62 ce qui rend plus facile la fixation de l'ensemble support 13-rotor 6 sur le centreur 4 équipé de l'actionneur 150. Dans ces figures le carter 3 porte une cible 32 par exemple pour capter la vitesse de rotation du carter 3 et donc du vilebrequin 11 ou pour régler l'allumage du véhicule ou pour le contrôle du moteur du véhicule automobile. On notera que le chignon des bobinages 8 le plus proche du carter 3 est conformé pour former un dégagement 80 à sa périphérie interne pour le logement des têtes des vis 45 afin de réduire l'encombrement axial du montage. La cible 32 est associée à un capteur envoyant des informations à l'unité électronique de commande et de gestion des bobinages 8 du stator 5.

Dans les figures 2 à 5 les deux entraîneurs sont axialement souples pour absorber les vibrations axiales et les déformations engendrées par le mouvement du vilebrequin 11 et du carter 3.

Bien entendu l'un des deux entraîneurs peut être rigide axialement.

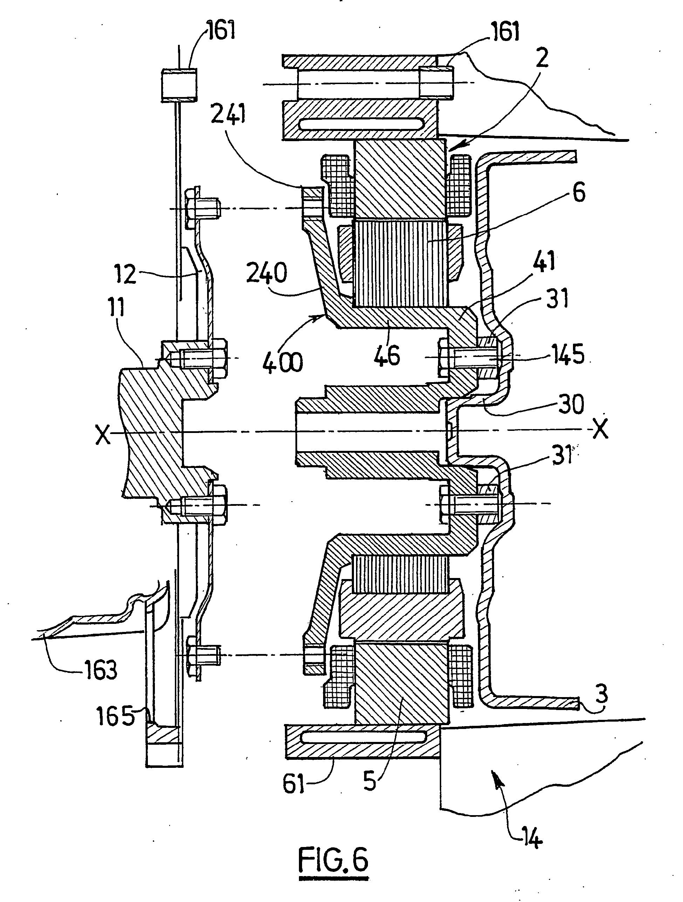

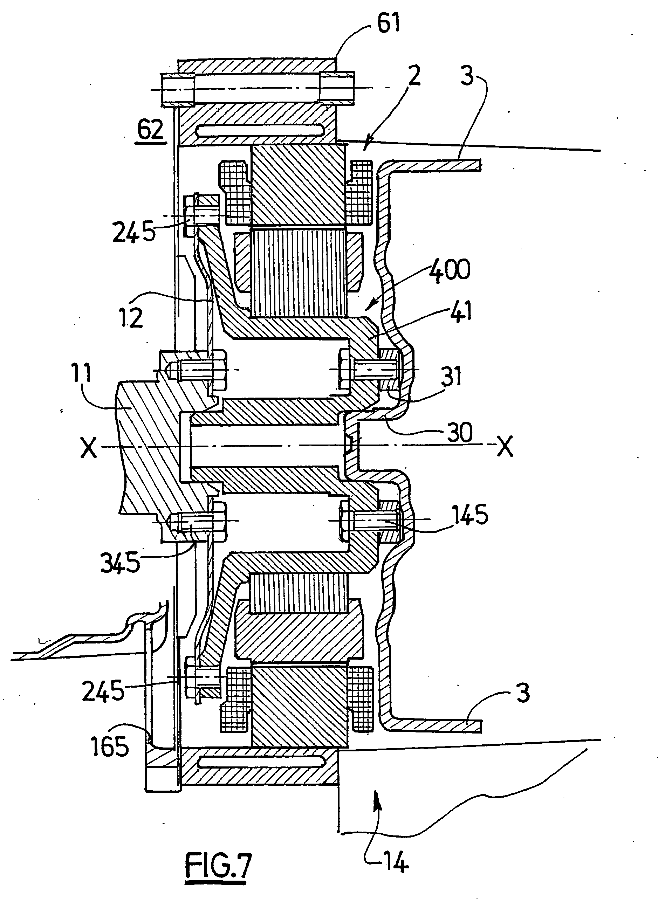

Ainsi, en variante, le deuxième entraîneur est rigide en étant moins haut que le premier entraîneur 12. Le deuxième entraîneur 41, d'orientation transversale, est intégré au support 400 comme visible dans le troisième mode de réalisation des figures 6 et 7. Les douilles de fixation 31 sont alors implantées en regard de la collerette 41; les vis 145 se vissant alors dans les douilles 31. Ainsi le support forme une pièce unique 400 avec le centreur, la collerette 41 se raccordant au manchon 46 et constituant également l'entraîneur. La collerette du centreur est donc confondue avec l'anneau du support en sorte que le deuxième entraîneur est fixé centralement au support.

Dans ce cas on monte d'abord l'entretoise 61 équipée du stator 5 sur les douilles 161 de la cloche 14, puis on monte l'ensemble manipulable et transportable, constitué du rotor 6 et du support centreur et entraîneur 400 sur le nez 30 et on fixe cet ensemble sur les douilles 31 ce qui permet de réduire le temps d'assemblage en final. Ensuite on poursuit le montage comme dans les figures 2 et 3; le premier entraîneur 12 étant souple axialement pour notamment absorber les déformations du carter 3. Cette solution est économique car elle fait appel à un nombre réduit de pièces et permet de supprimer la série de vis 45. En outre on réduit l'encombrement axial du montage de la machine électrique puisque les douilles 31 sont implantées au centre c'est à dire au voisinage du nez 30 dans une zone en creux, c'est à dire la dépression précitée, comme visible dans les figures. Le nombre de pièces à stocker est donc réduit.

Bien entendu la pièce unique 400, en variante, présente un flasque 240 moins haut et se monte ainsi comme dans le mode de réalisation des figures 4 et 5; l'entretoise 61 se montant d'abord sur le carter 62.

En variante c'est le premier entraîneur, qui est rigide.

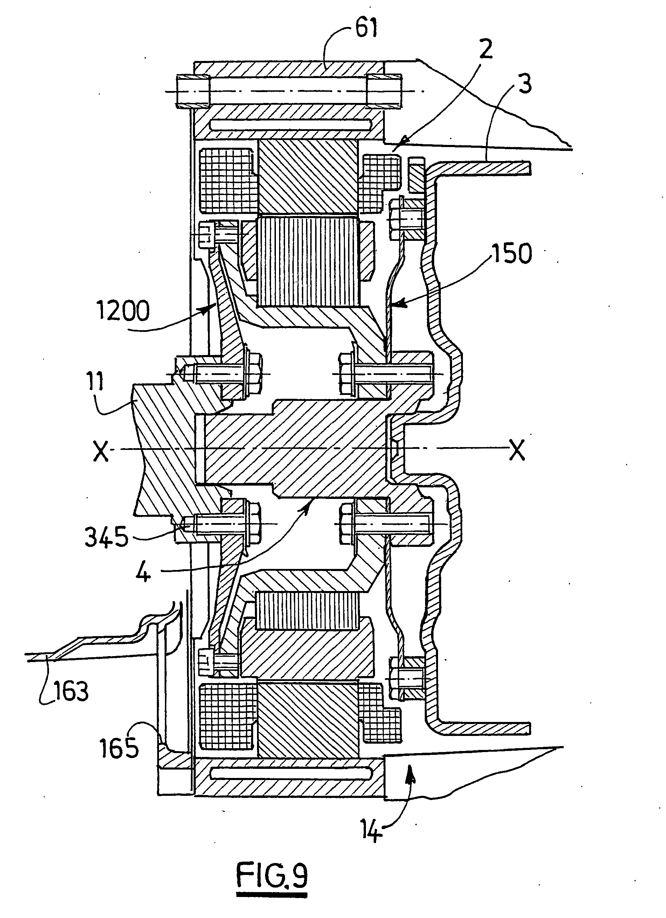

Ainsi dans le quatrième mode de réalisation des figures 8 et 9 l'entraîneur 1200 est en forme de flasque rigide et se monte à la place du premier entraîneur des figures 4 et 5. L'entraîneur 1200 comporte un anneau externe d'orientation transversale avec des creusures pour le montage des vis 245 et un anneau interne également d'orientation transversale plus épais pour l'appui des têtes des vis 345. L'anneau interne constitue la partie centrale de l'entraîneur 1200.

Une portion inclinée 1201 d'épaisseur variable relie entre eux les deux anneaux. L'inclinaison de la portion 1201 est fonction de l'inclinaison du flasque 240, ici de manière complémentaire comme visible à la figure 9. La rigidité de l'entraîneur 1200 permet de mieux soutenir l'anneau 241 et le support en sorte que l'entrefer 7 est plus précis ce qui permet d'augmenter les performances de la machine 2.

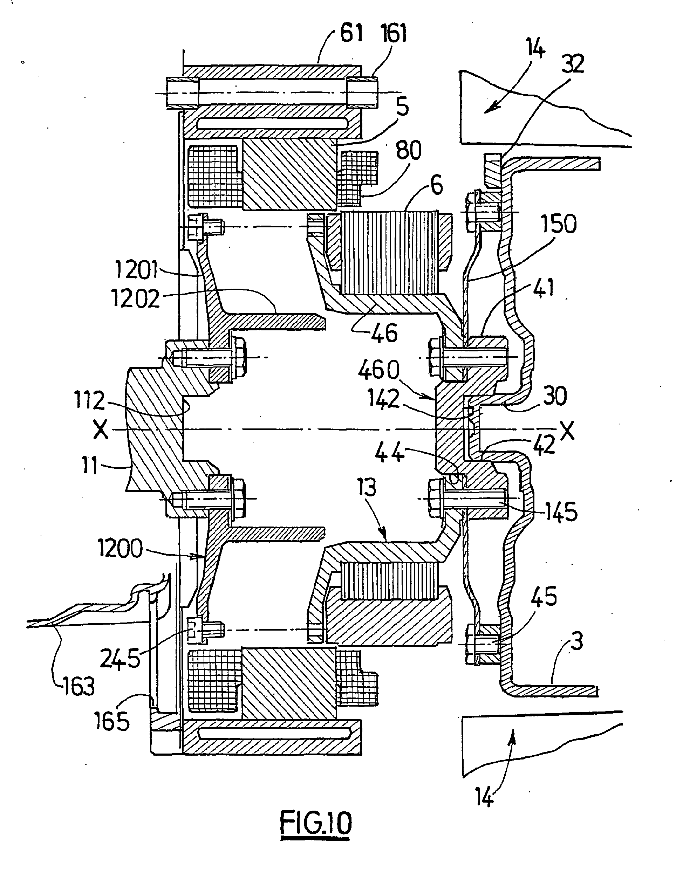

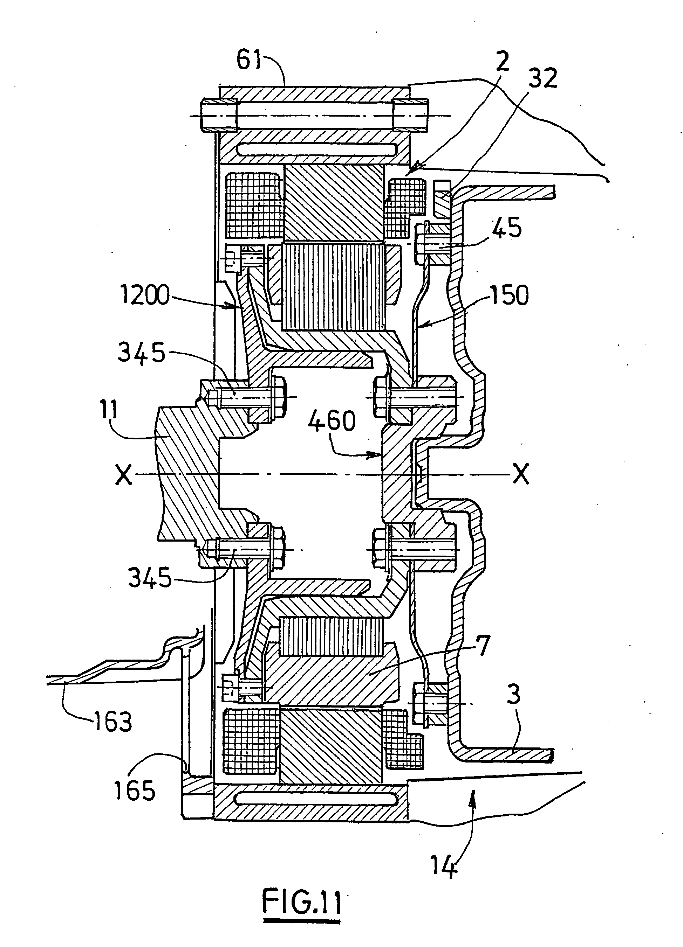

En variante, comme visible dans le cinquième mode de réalisation des figures 10 et 11, le premier entraîneur 1200 comporte un premier manchon 1202 d'orientation axiale servant de centreur au manchon 46 du support 13. Le manchon 46 est alors intérieurement usiné tout comme la périphérie externe du manchon 1202 en sorte que la périphérie externe du manchon 1202 est en contact intime avec la périphérie interne du manchon 46 plus long axialement que le manchon 1202. Ce manchon 1202 est issue de la base plus épaisse de la portion 1201 et est dirigé axialement vers le carter 3.

Cette disposition permet de simplifier le centreur des figures précédentes. Plus précisément ce centreur 460 est raccourci axialement et est donc simplifié car il comporte la portion 44, la collerette 41 et la cavité 142 à portée de centrage 42 pour le nez 30. Grâce au manchon de centrage 1202 l'entrefer 7 est encore plus précis puisque le manchon 46 du support est mieux soutenu. A chaque carter 62, 3 il est ainsi associé un centreur spécifique 460 au lieu du centreur unique 4 des figures 2 à 9 en sorte que la cavité 112 du vilebrequin n'est pas besoin d'être usinée. Le diamètre de centrage du support 13 est augmenté car le premier manchon 1202 s'étend sur une circonférence de diamètre moyen supérieur au diamètre de la périphérie externe de la collerette 41.

On notera que des rondelles frein peuvent être associées aux vis 145 et 345 comme visible par exemple dans les figures 4 et 8. Dans tous les cas la périphérie externe du premier entraîneur s'étend sur une circonférence de diamètre supérieure à celle du manchon 46 du support 13. Dans tous les modes de réalisation représentés le diamètre externe du premier entraîneur est supérieur au diamètre moyen du rotor 6. Bien entendu l'accès au organes de fixation 245 en variante est réalisé à partir d'une trappe montée sur le carter d'huile 163.

En variante la garniture 204 de la figure 1 est solidaire de la partie 301 du carter 3. Plusieurs garnitures 204 peuvent être prévues.

Dans les figures 2 à 5 et 8 à 11 la périphérie externe du rotor 6 s'étend sur une circonférence de diamètre globalement égal au diamètre moyen de la circonférence d'implantation des vis 45 et des douilles 31. Ce diamètre peut être inférieur au diamètre moyen de la circonférence d'implantation des vis 45 et des douilles 31.

En variante la périphérie externe du rotor 6 peut s'étendre sur une circonférence de diamètre supérieure au diamètre moyen de la circonférence d'implantation des vis 45 et des douilles 31. radialement. Dans tous les cas le rotor 6 est implanté au moins en majeure partie radialement en dessous du diamètre moyen de la circonférence d'implantation des vis 45 et des douilles 31 en sorte que l'inertie du rotor est réduite ainsi que la masse du support.

## Revendications

1. Montage de machine électrique tournante (2) pour véhicule automobile comportant un rotor (6) entouré par un stator (5) solidaire d'une entretoise (61) interposée entre le carter (62) du moteur à combustion interne du véhicule automobile présentant un vilebrequin (11) et une cloche (14), qui sert de logement au carter (3) d'un appareil d'accouplement hydrocinétique (1) comportant un nez de centrage (30), un premier entraîneur (12, 120, 1200) reliant le vilebrequin (11) du moteur à combustion interne du véhicule automobile à un support (13) portant le rotor(6) de la machine électrique tournante (2) et le support (13) étant relié à un deuxième entraîneur (15, 150 400) lui-même relié au carter (3) de l'appareil d'accouplement hydrocinétique (1) et **caractérisé en ce que** lesdits entraîneurs (12, 120, 1200, 15, 150, 1500) s'étendent de part et d'autre du rotor (6).

2. Montage selon la revendication 1, **caractérisé en ce que** le support (13) comporte une première partie sous forme d'un manchon (46) d'orientation axiale, dont la périphérie externe constitue une portée de montage pour le rotor (6) et **en ce que** le manchon (46) s'étend axialement entre les deux entraîneurs (entraîneur (12, 120, 1200-15, 150 400).

3. Montage selon la revendication 2, **caractérisé en ce que** le manchon (46) présente un flasque (240) dirigé radialement vers la périphérie externe du premier entraîneur (12, 120, 1200) pour liaison du support (13) au premier entraîneur (12, 120, 1200).

4. Montage selon la revendication 3, **caractérisé en ce que** le flasque (240) est de forme tronconique.

5. Montage selon la revendication 3 ou 4, **caractérisé en ce que** le flasque (240) présente à sa périphérie externe un anneau (241) transversal en regard de la périphérie externe du premier entraîneur (12, 120, 1200) pour sa fixation sur ce premier entraîneur à l'aide d'organes de fixation (245).

6. Montage selon la revendication 5, **caractérisé en ce que** le premier entraîneur (12,120) est axialement souple et consiste en une plaque à partie centrale d'orientation transversale par rapport, à l'axe de symétrie axial que comporte le dit montage.

7. Montage selon la revendication 5, **caractérisé en ce que** le premier entraîneur (1200) est rigide et comporte une partie centrale d'orientation transversale par rapport à l'axe de symétrie axial que comporte le dit montage.

8. Montage selon la revendication 7, **caractérisé en ce que** le premier entraîneur (1200) présente un premier manchon (1202) d'orientation axiale servant de centreur au manchon (46) du support (13) en sorte que la périphérie externe du premier manchon (1202) est en contact intime avec la périphérie interne du manchon (46) du support (13).

9. Montage selon l'une quelconque des revendications 6 à 8, **caractérisé en ce que** la périphérie externe du premier entraîneur (12,120, 1200) est décalée axialement par rapport à sa partie centrale en direction du carter (62) du moteur à combustion interne du véhicule automobile.

10. Montage selon l'une quelconque des revendications précédentes, **caractérisé en ce que** le support (13) comporte un anneau (140, 41) saillant en direction du nez de centrage (30) et **en ce que** l'anneau (140, 41) est solidaire d'un centreur (4,400,460) monté à centrage sur le nez de centrage (30)

11. Montage selon la revendication 10, **caractérisé en ce que** l'anneau (140,41) et le flasque (240) s'étendent en saillie de part et d'autre du rotor(6) respectivement vers le nez de centrage-(30) et vers la périphérie externe du premier entraîneur (12, 120, 1200).

12. Montage selon la revendication 10 ou 11, **caractérisé en ce que** le centreur (4,400) comporte une extrémité libre pénétrant à centrage dans une cavité (112) de l'extrémité libre (111) du vilebrequin (11).

13. Montage selon l'une quelconque des revendications 10 à 12, **caractérisé en ce que** le centreur (4, 460) présente une collerette (41) saillante de fixation pour l'anneau (140) et **en ce que** la partie centrale du second entraîneur (15,150) est intercalée entre l'anneau(140) et la collerette (41)

14. Montage selon la revendication 13, **caractérisé en ce que** le second entraîneur, (15, 150) est fixé à sa périphérie externe sur des douilles (31) de fixation solidaires du carter (3) de l'appareil d'accouplement hydrocinétique et **en ce que** le second entraîneur est axialement souple.

15. Montage selon la revendication 11 ou 12, **caractérisé en ce que** le second entraîneur (41) consiste en une collerette saillante issue du centreur (400) et fixée sur le carter (3) de l'appareil d'accouplement hydrocinétique et **en ce que** la collerette (41) constitue l'anneau issu du support (13) en sorte que le centreur (400) forme une pièce unique avec le support et le second entraîneur (41).

16. Montage selon l'une quelconque des revendications 1 à 15, **caractérisé en ce que** des douilles de centrage (161) interviennent entre l'entretoise (61) et respectivement le carter (62) du moteur à combustion interne du véhicule automobile et la cloche (14).

17. Montage, selon l'une quelconque des revendications 3 à 16 **caractérisé en ce que** la périphérie externe du premier entraîneur (12, 120, 1200) est fixée sur le flasque (240) du support (13) à l'aide d'organes de fixation (245), tels que des vis, **en ce qu'**un carter d'huile (163) est fixé dans la partie basse du carter (62) du moteur à combustion interne du véhicule automobile et **en ce que** le carter d'huile (163) présente une (165) ouverture pour accès aux organes de fixation (245) par rotations successives du premier entraîneur (12, 120, 1200).

18. Montage selon la revendication 17, **caractérisé en ce que** la périphérie externe du flasque (240) s'étend en dessous de la périphérie interne du stator (5).

## Claims

1. A rotating electrical machine assembly (2) for an automotive vehicle including a rotor (6) surrounded by a stator (5) integral with a spacer (61) sandwiched between the case (62) of an internal combustion engine of the automotive vehicle having a crankshaft (11) and a bell (14), which acts as a housing for the case (3) of an hydrodynamic coupling apparatus (1) including a centring nose (30), a first driver (12, 120, 1200) connecting the crankshaft (11) of the internal combustion engine of the automotive vehicle to a carrier (13) carrying the rotor (6) of the rotating electrical machine (2) and the carrier (13) being connected to a second driver (15, 150, 400) in turn connected to the case (3) of the hydrodynamic coupling apparatus (1) and **characterised in that** said drivers (12, 120, 1200, 15, 150, 1500) extend on either side of the rotor (6).

2. The assembly according to claim 1, **characterised in that** the carrier (13) includes a first part in the form of a sleeve (46) with an axial orientation, the outer periphery of which acts as a mounting face for the rotor (6) and **in that** the sleeve (46) axially extends between both drivers (12, 120, 1200, 15, 150, 400).

3. The assembly according to claim 2, **characterised in that** the sleeve (46) has a flange (240) radially directed towards the outer periphery of the first driver (12, 120, 1200) for connecting the carrier (13) to the first driver (12, 120, 1200).

4. The assembly according to claim 3, **characterised in that** the flange (240) has a tapered shape.

5. The assembly according to claim 3 or 4, **characterised in that** the flange (240) has at its outer periphery a ring (241) being transverse facing to the outer periphery of the first driver (12, 120, 1200) for securing thereof on such first driver using securing members (245).

6. The assembly according to claim 5, **characterised in that** the first driver (12, 120) is axially flexible and consists of a plate with a centre part having an orientation transverse with respect to the axis of axial symmetry said assembly has.

7. The assembly according to claim 5, **characterised in that** the first driver (1200) is rigid and has a centre part with an orientation transverse with respect to the axis of axial symmetry said assembly has.

8. The assembly according to claim 7, **characterised in that** the first driver (1200) has a first sleeve (1202) with an axial orientation acting as a centraliser for the sleeve (46) of the carrier (13) such that the outer periphery of the first sleeve (1202) is in close contact with the inner periphery of the sleeve (46) of the carrier (13).

9. The assembly according to any of claims 6 to 8, **characterised in that** the outer periphery of the first driver (12, 120, 1200) is axially offset with respect to its centre part towards the case (62) of the internal combustion engine of the automotive vehicle.

10. The assembly according to any of preceding claims, **characterised in that** the carrier (13) includes a ring (140, 41) protruding towards the centring nose (30) and **in that** the ring (140, 41) is integral with a centraliser (4, 400, 460) centrally mounted to the centring nose (30).

11. The assembly according to claim 10, **characterised in that** the ring (140, 41) and the flange (240) projectingly extend on either side of the rotor (6) towards the centring nose (30) and the outer periphery of the first driver (12, 120, 120), respectively.

12. The assembly according to claim 10 or 11, **characterised in that** the centraliser (4, 400) includes a free end centrally penetrating into a cavity (112) of the free end (111) of the crankshaft (11).

13. The assembly according to any of claims 10 to 12, **characterised in that** the centraliser (4, 460) has a projecting skirt (41) for securing the ring (140) and **in that** the centre part of the second driver (15, 150) is sandwiched between the ring (140) and the skirt (41).

14. The assembly according to claim 13, **characterised in that** the second driver (15, 150) is secured at the outer periphery thereof to securing bushings (31) integral with the case (3) of the hydrodynamic coupling apparatus and **in that** the second driver is axially flexible.

15. The assembly according to claim 11 or 12, **characterised in that** the second driver (41) consists of a projecting skirt coming from the centraliser (400) and secured to the case (3) of the hydrodynamic coupling apparatus and **in that** the skirt (41) makes up the ring coming from the carrier (13) so that the centraliser (400) forms a single piece with the carrier and the second driver (41).

16. The assembly according to any of claims 1 to 15, **characterised in that** centring bushings (161) act between the spacer (61) and the case (62) of the internal combustion engine of the automotive vehicle and the bell (14), respectively.

17. The assembly according to any of claims 3 to 16, **characterised in that** the outer periphery of the first driver (12, 120, 1200) is secured to the flange (240) of the carrier (13) using securing members (245), such as screws, **in that** an oil sump (163) is secured in the low part of the case (62) of the internal combustion engine of the automotive vehicle and **in that** the oil sump (163) has an opening (165) for accessing to the securing members (245) through consecutive revolutions of the first driver (12, 120, 1200).

18. The assembly according to claim 17, **characterised in that** the outer periphery of the flange (240) extends below the inner periphery of the stator (5).

## Patentansprüche

1. Einbau einer drehenden elektrischen Maschine (2) für ein Kraftfahrzeug, umfassend einen Rotor (6), der von einem Stator (5) umgeben ist, der fest mit einem Abstandshalter (61) verbunden ist, der zwischen dem Gehäuse (62) des Verbrennungsmotors des Kraftfahrzeugs, das eine Kurbelwelle (11) aufweist, und einer Glocke (14) eingefügt ist, die als Aufnahme für das Gehäuse (3) eines hydrokinetischen Kupplungsgerätes (1) dient, das eine Zentriernase (30) umfasst, wobei ein erster Mitnehmer (12, 120, 1200) die Kurbelwelle (11) des Verbrennungsmotors des Kraftfahrzeugs mit einer Auflage (13) verbindet, die den Rotor (6) der drehenden elektrischen Maschine (2) trägt, und wobei die Auflage (13) mit einem zweiten Mitnehmer (15, 150, 400) verbunden ist, der selbst wiederum mit dem Gehäuse (3) des hydrokinetischen Kupplungsgerätes (1) verbunden ist, **dadurch gekennzeichnet, dass** sich die Mitnehmer (12, 120, 1200, 15, 150, 1500) auf jeder Seite des Rotors (6) erstrecken.

2. Einbau nach Anspruch 1, **dadurch gekennzeichnet, dass** die Auflage (13) einen ersten Teil mit der Form einer axial ausgerichteten Muffe (46) umfasst, deren äußere Rand eine Tragfläche für den Einbau des Rotors (6) bildet, und **dadurch**, dass sich die Muffe (46) axial zwischen den zwei Mitnehmern (12, 120, 1200, 15, 150, 400) erstreckt.

3. Einbau nach Anspruch 2, **dadurch gekennzeichnet, dass** die Muffe (46) einen Flansch (240) aufweist, der für die Verbindung der Auflage (13) mit dem ersten Mitnehmer (12, 120, 1200) radial zum äußeren Rand des ersten Mitnehmers (12, 120, 1200) hin gerichtet ist.

4. Einbau nach Anspruch 3, **dadurch gekennzeichnet, dass** der Flansch (240) kegelstumpfförmig ist.

5. Einbau nach Anspruch 3 oder 4, **dadurch gekennzeichnet, dass** der Flansch (240) an seinem äußeren Rand einen quer verlaufenden Ring (241) gegenüber dem äußeren Rand des ersten Mitnehmers (12, 120, 1200) für seine Befestigung auf diesem ersten Mitnehmer mithilfe von Befestigungselementen (245) aufweist.

6. Einbau nach Anspruch 5, **dadurch gekennzeichnet, dass** der erste Mitnehmer (12, 120) axial biegsam ist und aus einer Platte besteht, deren Mittelteil in Bezug auf die axiale Symmetrieachse, die der Einbau umfasst, quer verlaufend ausgerichtet ist.

7. Einbau nach Anspruch 5, **dadurch gekennzeichnet, dass** der erste Mitnehmer (1200) starr ist und einen Mittelteil umfasst, der in Bezug auf die axiale Symmetrieachse, die der Einbau umfasst, quer verlaufend ausgerichtet ist.

8. Einbau nach Anspruch 7, **dadurch gekennzeichnet, dass** der erste Mitnehmer (1200) eine erste, axial ausgerichtete Muffe (1202) umfasst, die als Zentriereinrichtung für die Muffe (46) der Auflage (13) dient, so dass der äußere Rand der ersten Muffe (1202) in engem Kontakt mit dem inneren Rand der Muffe (46) der Auflage (13) ist.

9. Einbau nach einem der Ansprüche 6 bis 8, **dadurch gekennzeichnet, dass** der äußere Rand des ersten Mitnehmers (12, 120, 1200) in Bezug auf seinen Mittelteil in Richtung des Gehäuses (62) des Verbrennungsmotors des Kraftfahrzeugs axial versetzt ist.

10. Einbau nach einem der vorhergehenden Ansprüche, **dadurch gekennzeichnet, dass** die Auflage(13) einen Ring (140, 41) umfasst, der in Richtung der Zentriernase (30) vorspringt, und **dadurch**, dass der Ring (140, 41) fest mit einer Zentriereinriohtung(4,400,460) verbunden ist, die zur Zentrierung auf der Zentriernase (30) befestigt ist.

11. Einbau nach Anspruch 10, **dadurch gekennzeichnet, dass** sich der Ring (140, 41) und der Flansch (240) auf jeder Seite des Rotors (6) zur Zentriernase (30) hin beziehungsweise zum äußeren Rand des ersten Mitnehmers (12, 120, 1200) hin vorspringend erstrecken.

12. Einbau nach Anspruch 10 oder 11, **dadurch gekennzeichnet, dass** die Zentriereinrichtung (4,400) ein freies Ende umfasst, das zur Zentrierung in einen Hohlraum(112) des freien Endes (111) der Kurbelwelle (11) eindringt.

13. Einbau nach einem der Ansprüche 10 bis 12, **dadurch gekennzeichnet, dass** die Zentriereinrichtung (4,460) einen vorspringenden Ansatz (41) zur Befestigung für den Ring (140) aufweist, und **dadurch**, dass der Mittelteil des zweiten Mitnehmers (15, 150) zwischen dem Ring (140) und dem Ansatz (41) eingefügt ist.

14. Einbau nach Anspruch 13, **dadurch gekennzeichnet, dass** der zweite Mitnehmer (15, 150) an seinem äußeren Rand an Befestigungshülsen (31) befestigt ist, die fest dem Gehäuse (3) des hydrokinetischen Kupplungsgerätes verbunden sind, und **dadurch**, dass der zweite Mitnehmer axial biegsam ist.

15. Einbau nach Anspruch 11 oder 12, **dadurch gekennzeichnet, dass** der zweite Mitnehmer(41) aus einem vorspringenden Ansatz besteht, der aus der Zentriereinrichtung (400) hervorgeht und am Gehäuse (3) des Kupplungsgerätes befestigt ist, und **dadurch**, dass der Ansatz (41) den Ring bildet, der aus der Auflage (13) hervorgeht, so dass die Zentriereinrichtung (400) ein einziges Teil mit der Auflage und dem zweiten Mitnehmer (41) bildet.

16. Einbau nach einem der Ansprüche 1 bis 15, **dadurch gekennzeichnet, dass** Zentrierhülsen (161) zwischen dem Abstandshalter (61) und dem Gehäuse (62) des Verbrennungsmotors des Kraftfahrzeugs beziehungsweise der Glocke (14) eingreifen.

17. Einbau nach einem der Ansprüche 3 bis 16, **dadurch gekennzeichnet, dass** der äußere Rand des ersten Mitnehmers (12, 120, 1200) auf dem Flansch (240) der Auflage (13) mithilfe von Befestigungselementen (245), wie etwa Schrauben, befestigt ist, **dadurch**, dass ein Ölgehäuse (163) im unteren Teil des Gehäuses (62) des Verbrennungsmotors des Kraftfahrzeugs befestigt ist, und **dadurch**, dass das Ölgehäuse (163) eine Öffnung (165) für den Zugang zu den Befestigungselementen (245) durch aufeinander folgende Drehungen des ersten Mitnehmers (12, 120, 1200) aufweist.

18. Einbau nach Anspruch 17, **dadurch gekennzeichnet, dass** sich der äußere Rand des Flansches (240) unterhalb des inneren Randes des Stators (5) erstreckt.
